# EUROPEAN PATENT SPECIFICATION

(11) **EP 2 110 737 B1**
(45) Date of publication and mention of the grant of the patent: **19.10.2011**
(21) Application number: 09001633.8
(22) Date of filing: 05.02.2009
(51) Int. Cl.: G06F 3/048

(54) **Method for displaying information, and electronic apparatus and storage medium thereof**
Verfahren zum Anzeigen von Information und elektronische Vorrichtung und Speichermedium dafür
Procédé d'informations d'affichage, et appareil électronique et support de stockage associé

(30) Priority: 18.04.2008 TW 97114574
(43) Date of publication of application: 21.10.2009
(73) Proprietor: HTC Corporation, Taoyuan County 330 (TW)
(72) Inventor: Kyu, Yone-Myint, Taoyuan City Taoyuan County 330 (TW); Wu, Tsu-Chin, Taoyuan City Taoyuan County 330 (TW); Yang, Chih-Wei, Taoyuan City Taoyuan County 330 (TW)
(74) Representative: Becker Kurig Straus

(56) References cited:
- WO-A-99/66394
- US-A1- 2005 132 286
- US-A1- 2007 006 097
- US-A1- 2007 091 209
- US-B2- 7 242 406
- ANONYMOUS: "How to make viewing Web pages easier" 8 December 2006 (2006-12-08), , XP002531970 Retrieved from the Internet: URL:http://www.smartphonemag.com/cms/print /372> [retrieved on 2009-06-11] * the whole document *

## Description

### BACKGROUND OF THE INVENTION

### 1. Field of the Invention

The present invention generally relates to an information displaying technique, and more particularly, to an information displaying technique adaptable to an electronic apparatus.

### 2. Description of Related Art

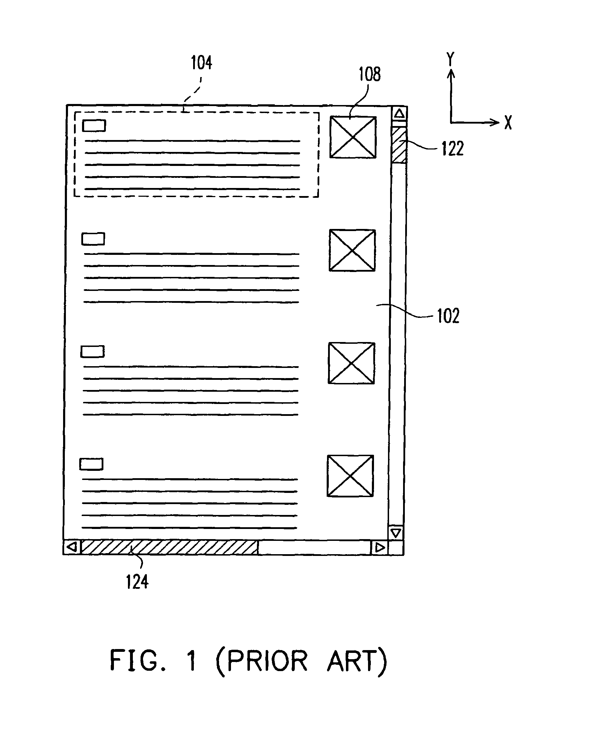

FIG. 1 is a diagram illustrating how a portable electronic apparatus displays an information page. Referring to FIG. 1, when a user views an information page, such as a webpage, by using a portable electronic apparatus, the image shown in the display area 102 is displayed. Generally, an information page may contain a plurality of information columns 104 which are respectively composed of words and a plurality of information columns 108 which are respectively composed of pictures. However, because of the limited screen size of the portable electronic apparatus, only a portion of the information page can be displayed in the display area 102. If the user wants to look at the other portions of the information page, he/she has to move the display area 102 by using the scroll bars 122 and 124.

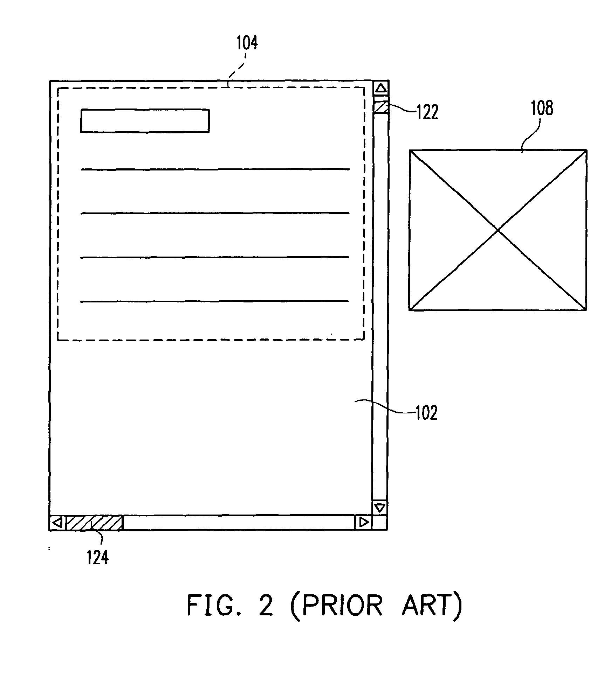

As described above, due to the limitation in the screen size of the electronic apparatus, if all the information in an information page is displayed in the display area 102, the information (regardless of whether it is text information or pictures) will become unrecognizable because of the small displayed size. Thus, conventionally, a technique which allows a user to directly perform predetermined operations through certain input devices (for example, a touch panel) in the display area 102 is developed. For example, the user directly clicks the information column 104 as shown in FIG. 1 to change the image into the image as shown in FIG. 2. As shown in FIG. 2, the width of the information column 104 is substantially the same as the width of the display area 102 but does not exceed it.

Accordingly, the information displayed in the display area 102 is focused on the content of the information column 104, and the user can read the information (for example, text) in the information column 104 conveniently. However, the technique described above only adjusts the zoom ratio of the information page in the display area but cannot make sure that the information in the information column 104 is displayed with an appropriate display size (for example, the size of the characters). In other words, through this technique, the user may not be able to read a specific portion of the information page he/she has selected conveniently through the predetermined operation. US 2005/132286 and WO99/99394 disclose further prior art.

### SUMMARY OF THE INVENTION

Accordingly, the present invention is directed to a system, method and computer program producer for displaying an information page which allows a user to conveniently read information provided by the information page, as in claims 1,5 and 9 respectively.

The present invention is directed to an electronic apparatus which can be served as a platform for displaying information.

The present invention provides an information page displaying method. The method displays a portion of an information page in a display area, wherein the information page includes at least an information column, and the information column is composed of a plurality of information units arranged along an arrangement direction. When a select event occurs in the information column, the information units in the information column are displayed according to a display size within a predetermined size range. Then, the layout of the information units in the information column is changed so that an arrangement length of the information units in the arrangement direction does not exceed the width of the display area. Accordingly, a user can view all the information in the information column by simply moving the display area along a browsing direction, wherein the browsing direction is substantially perpendicular to the arrangement direction.

The present invention provides an information page displaying system suitable for an electronic apparatus. The system includes a loading module, a detecting module, and an adjusting module. The loading module loads an information page, wherein the information page has at least an information column, and the information column is composed of a plurality of information units arranged along an arrangement direction. The detecting module detects whether or not a select event occurs in the information column and issues a switch command to the adjusting module when the select event occurs. When the adjusting module receives the switch command, the adjusting module displays the information units in the information column according to a display size within a predetermined size range. Next, the layout of the information units in the information column is changed so that an arrangement length of the information units in the arrangement direction does not exceed the width of the display area. Thereby, a user can view all the information in the information column by simply moving the display area along a browsing direction, wherein the browsing direction is substantially perpendicular to the arrangement direction.

The present invention also provides a storage medium which stores a plurality of command codes, wherein the command codes are used for driving an electronic apparatus to display an information page. The information page has at least an information column, and the information column is composed of a plurality of information units arranged along an arrangement direction. When a select event occurs in the information column, the information units in the information column are displayed according to a display size within a predetermined size range. Next, the layout of the information units in the information column is changed so that an arrangement length of the information units in the arrangement direction does not exceed the width of the display area. Thereby, a user can view all the information in the information column by simply moving the display area along a browsing direction, wherein the browsing direction is substantially perpendicular to the arrangement direction.

According to an example of the present invention, the step for detecting whether or not the select event occurs in the information column includes detecting whether or not the information column is continuously clicked twice.

In the present invention, the information units (for example, words, pictures, or icons) in an information column are displayed according to a display size within a predetermined size range when a select event occurs in the information column, wherein the display size (for example, the display size of characters or pictures) within the predetermined size range is always an appropriate display size which allows a user to view the information in the information column conveniently. The predetermined size range may be set manually or obtained by recording and calculating a historical data about the display behaviours of the display area, such as the display size of the display area which is mostly used for displaying the information units. Thereby, a user can conveniently view information in an electronic apparatus, especially a handheld apparatus having a small-sized screen, through the technique provided by the present invention. Moreover, according to the present invention, the layout of the information units in the information column can be changed after the displayed sizes of the information units in the information column are changed, so that the user can view all the information in the information column by simply moving the display area along a browsing direction. Thereby, it is made more convenient for the user to view the information in the information page.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram illustrating how a portable electronic apparatus displays an information page.

FIG. 2 is a diagram illustrating how a portable electronic apparatus displays a zoomed information page.

FIG. 3 is a diagram of an electronic apparatus.

FIG. 4 illustrates a circuit structure of an electronic apparatus according to an embodiment of the present invention.

FIG. 5 is a diagram of a display system according to an embodiment of the present invention.

FIG. 6 is a flowchart of a method for displaying an information page according to an embodiment of the present invention.

FIG. 7 is a diagram illustrating how a portion of an information page is displayed according to an embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

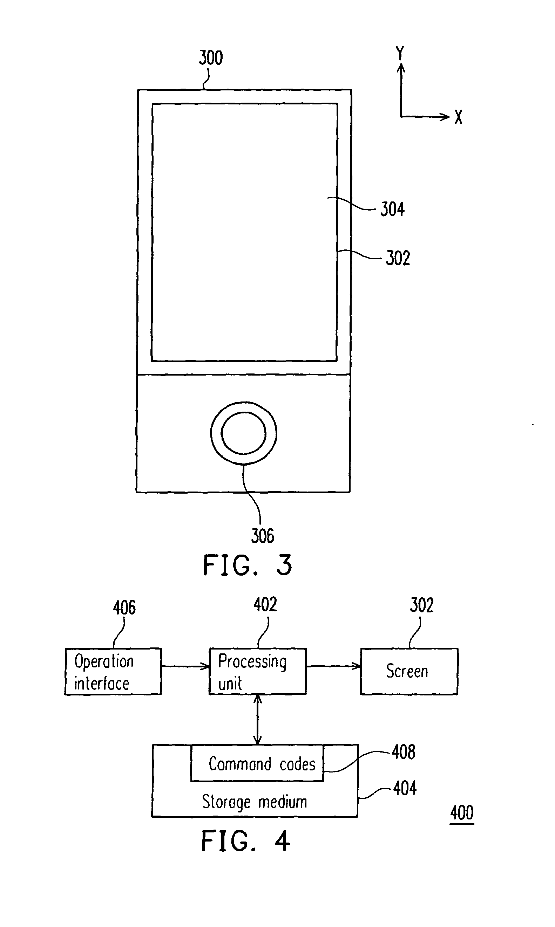

FIG. 3 is a diagram of an electronic apparatus. Referring to FIG. 3, in the present embodiment, the electronic apparatus 300 may be a mobile phone, a personal digital assistant (PDA), a pocket PC, or a global positioning system (GPS) receiver, etc. The electronic apparatus 300 includes a screen 302, such as a touch panel, which has a display area 304. The display area 304 has its own margins and width in respectively direction X and direction Y. In the present embodiment, the direction X is substantially perpendicular to the direction Y. In addition, besides the touch panel 302, the operation interface of the electronic apparatus 300 may further include the button or push-button switch 306 as shown in FIG. 3. A user can control the operation of the electronic apparatus 300 by using different types of operation interfaces.

FIG. 4 illustrates a circuit structure 400 of an electronic apparatus according to an embodiment of the present invention, wherein the circuit structure 400 may be implemented in the electronic apparatus 300 as shown in FIG. 3. Referring to FIG. 4, the circuit structure 400 includes a processing unit 402, a storage medium 404, an operation interface 406, and aforementioned screen 302. The processing unit 402 is coupled to the screen 302, the operation interface 406, and the storage medium 404 through a transmission interface. The storage medium 404 may be a non-volatile memory, such as a read only memory (ROM), a flash memory, a hard disc device, or a compact disc (CD) medium.

The storage medium 404 stores a plurality of command codes 408. The command codes 408 drive the processing unit 402 to process an information page and display the information page in the screen 302, wherein the method for processing and displaying the information page will be described below. In other words, the processing unit 402 driven by the command codes 408 can execute a method provided in an embodiment of the present invention. In addition, the operation interface 406 may be the aforementioned touch panel or a signal input device such as a push-button switch.

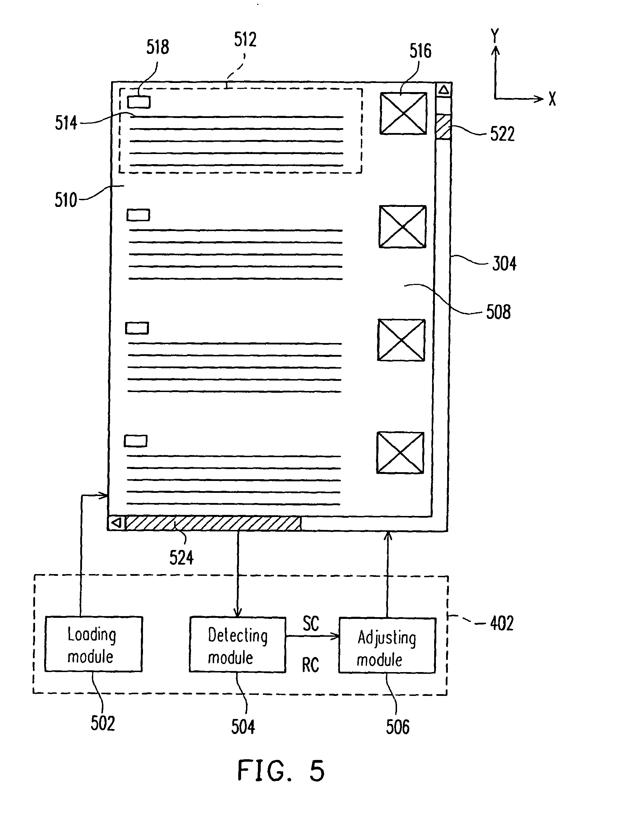

FIG. 5 is a diagram of a display system according to an embodiment of the present invention, wherein the display system is generated when the processing unit 402 in FIG. 4 executes the command codes 408. Referring to FIG. 5, in the present embodiment, the display system includes a loading module 502, a detecting module 504, and an adjusting module 506. The loading module 502 loads an information page 510 and displays the information page 510 in the display area 304, wherein the display area 304 may be located in the screen 302 as shown in FIG. 4. In the present embodiment, the loading module 502 can obtain the information page 510 from the Internet or directly from the storage medium 404.

The information page 510 contains at least an information column 512, and the information column 512 is composed of a plurality of information units 514 arranged along an arrangement direction (for example, along the direction X in the present embodiment). In the present embodiment, the information units 514 in the information column 512 are words, and in another embodiment of the present invention, the information units 514 in the information column 512 may also be pictures or icons, such as the information units in the information column 516.

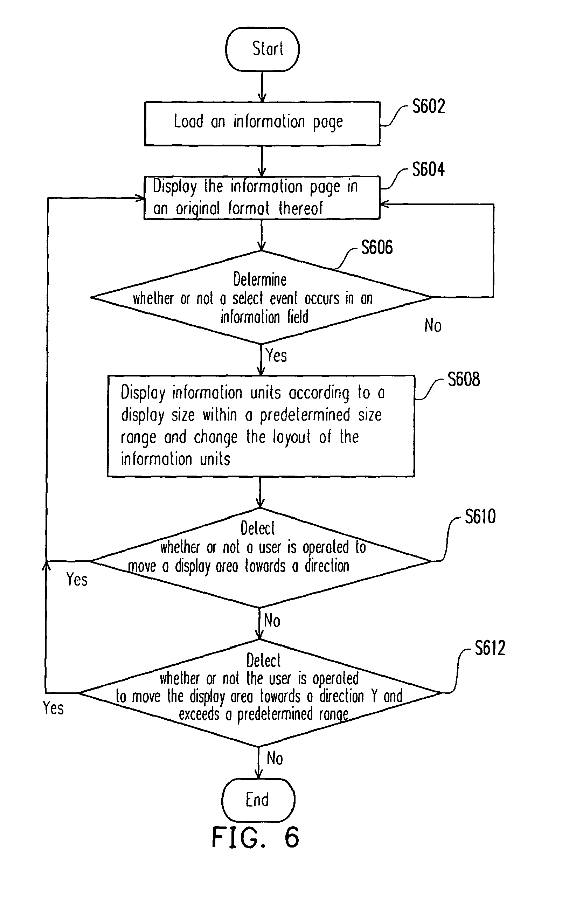

FIG. 6 is a flowchart of a method for displaying an information page according to an embodiment of the present invention. Referring to both FIG. 5 and FIG. 6, in step S602, the loading module 502 loads the information page 510. Then, in step S604, the information page 510 is displayed in the display area 304 in an original format of the information page 510. Herein if the original size of the information page 510 exceeds the range of the display area 304, only a portion of the information page 510 can be displayed in the display area 304. In this case, the user has to move the display area 304 by using the scroll bars 522 and 524 to view the other portions of the information page 510. Besides, when the information page 510 is displayed in its original size, the information units 514 (text, pictures, or icons) may be very small and difficult to read.

In order to describe the present invention more conveniently and to allow those having ordinary knowledge in the art to understand the spirit of the present invention more clearly, the information units 514 will be described as texts in following descriptions.

Referring to FIG. 5 and FIG. 6 again, in step S606, the detecting module 504 determines whether or not a select event occurs in the information column 512. The select event may be triggered by the user through the operation interface 406 as shown in FIG. 4, such as the touch panel 508 in FIG. 5. Thus, in the present embodiment, the step for determining whether or not the select event occurs in the information column 512 may be determining whether or not the user clicks the touch panel 508 for a predetermined times (for example, twice) in the information column 512. If it is determined that the user clicks the touch panel 508 twice, it is determined that the select event occurs in the information column 512.

When the detecting module 504 detects that the select event occurs in the information column 512, the detecting module 504 generates a switch command SC to the adjusting module 506. Then, in step S608, the adjusting module 506 displays the information units 514 in the information column 512 according to a display size (for example, displays each of the information units 514 in the information column 512 with 15x15 pixels), wherein the display size is within a predetermined size range (for example, 10x10 pixels~20x20 pixels). The information units displayed according to display sizes within the predetermined size range can be read by the user instantly and conveniently. Thus, this predetermined size range can be set manually or obtained by recording and calculating a historical data regarding the display behaviours of the display area. For example, the predetermined size range contains display sizes of the display area which are mostly used for displaying the information units.

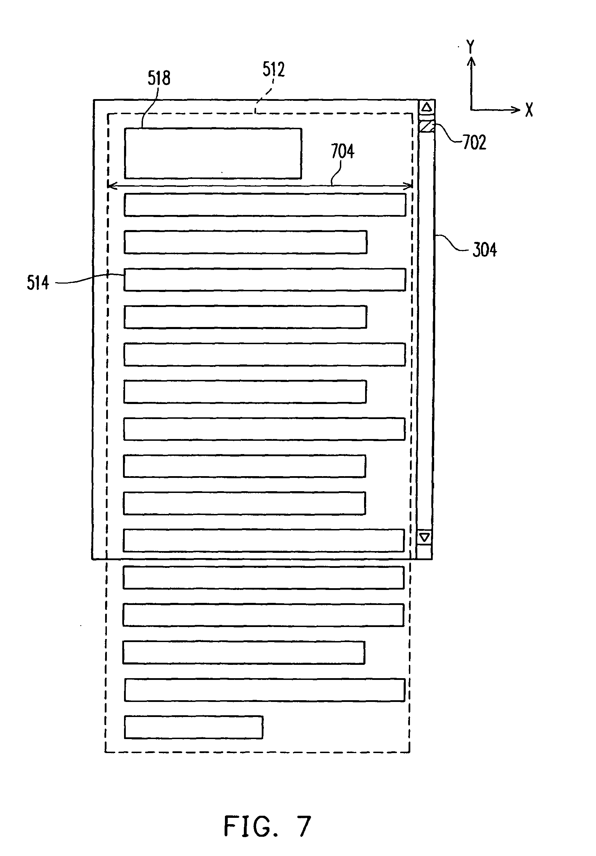

The difference in the display of the information column 512 before or after the step S608 can be understood by comparing FIG. 5 and FIG. 7. In FIG. 5, the display size of the information units 514 is only 5x5 pixels, which may be too small to the user. Thus, through the adjustment of the adjusting module 506, the display size thereof is changed to 15x15 pixels in FIG. 7 so that the user can read the information conveniently. However, the size of the information column 512 changes along with the display size of the information units 514 and accordingly the width of the information column 512 exceeds the width of the display area 304, which makes it very inconvenient to the user. Thus, in step S608, the layout of the information units 514 is also changed to change the width of the information column 512. The rule for changing the layout of the information units 514 is to make the width of the information column 512 to approximate the width of the display area 304 but not exceed it. Namely, an arrangement length 704 of the information units 514 in the arrangement direction (for example, the direction X in the present embodiment) approximates but does not exceed the width of the display area 304. Accordingly, the length of the information column 512 may exceed the length of the display area 304, but the width thereof does not exceed the width of the display area 304. In this case, the user can browse all the information in the information column 512 by simply moving the display area 304 along a browsing direction (for example, the direction Y in the present embodiment) through the scroll bar 702. In the present embodiment, the browsing direction and the arrangement direction are perpendicular to each other.

In addition, referring to FIG. 5, before the step S608 is executed, the information column 512 may have information units 514 displayed in different display sizes (for example, the information units 514 are displayed with 5x5 pixels while the information unit 518 is displayed with 8x8 pixels). Thus, an additional function is provided in step S608, which is to make the information unit 518 in FIG. 7 also greater than the information units 514 or even maintains a specific ratio between the display sizes of the information units 514 and the information unit 518. Namely, the ratio between the display sizes of the information units 514 and the information unit 518 before the step S608 is executed is equal to the ratio between the display sizes of the information units 514 and the information unit 518 after the step S608 is executed (for example, in FIG. 7, the information units 514 are displayed with 10x10 pixels and the information unit 518 is displayed with 16x16 pixels).

Additionally, in the present embodiment, a recover mechanism is further provided after the user finishes reading the information in the information page 510 by using the layout illustrated in FIG. 7 so that the user can return to the mode before the select event occurs to read the information page 510. Referring to FIGs. 5, 6, and 7, because in the present embodiment, the user can browse all the information in the information column 512 by simply moving the display area 304 along the direction Y (the browsing direction) in the mode illustrated in FIG. 7, when the detecting module 504 detects that the user performs an operation to move the display area 304 towards the direction X (the arrangement direction) in step S610, it is determined that the user wants to go back to the display mode illustrated in FIG. 5. In this case, the detecting module 504 issues a recover command RC to the adjusting module 506 so that the adjusting module 506 displays the information page 510 in the original format of the information page 510 before the select event occurs. Accordingly, the user can read the information page 510 in the mode as shown in FIG. 5.

Besides performing the recover operation by using the method described in foregoing step S610, the detecting module 504 may also perform the recover operation as in step S612. In step S612, whether or not the user operates to move the display area 304 towards the direction Y (the browsing direction) and exceeds a predetermined range (for example, the range of the information column 512) is determined. When the detecting module 504 determines that the user moves the display area 304 towards the direction Y and exceeds the predetermined range ("Yes" in step S612), then in the present embodiment it is determined that the user wants to read information out of the information column 512. In this case, the detecting module 504 also issues the recover command RC to the adjusting module 506. Similarly, when the adjusting module 506 receives the recover command RC, it displays the information page 510 according to the original format of the information page 510 before the select event occurs so that the user can read the information page 510 in the mode illustrated in FIG. 5.

In overview, according to the present invention, when a select event occurs in an information column, the information units in the information column are displayed according to a display size within a predetermined size range, and the layout of the information units is changed so that the width of the information column won't exceed the width of the display area. Thereby, a user can read the information in the information column more clearly and conveniently.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A system for displaying an information page (510) suitable for a mobile apparatus, comprising:
a loading module (502), arranged to load and display the information page (510) in a display area (304) of the mobile apparatus, wherein the information page (510) comprises at least an information column (512) having a plurality of information units (514) arranged along an arrangement direction, and the information units (514) comprise at least one of words, pictures, and icons;
a detecting module (504), arranged to detect whether or not a select event occurs in the information column (512), and to issue a switch command when the select event occurs; and
an adjusting module (506), coupled to the detecting module (504), arranged to display the information units (514) according to a display size within a predetermined size range when the switch command is issued, and to change a layout of the information units (514) in the information column (512) so that an arrangement length (704) of the information units (514) in the arrangement direction does not exceed a width of the display area (304),
wherein the detecting module (504) is further arranged to detect whether or not an operated event occurs after the select event occurs and, when the operated event occurs, to issue a recover command to the adjusting module (506) to display the information page (510) in the display area (304) according to an original format before the select event occured, the operated event is that the information page displayed in the display area (304) is operated to move towards the arrangement direction or that the information page displayed in the display area (304) is operated to move towards a browsing direction and exceeds a predetermined range, the browsing direction being substantially perpendicular to the arrangement direction.

2. The system according to claim 1, wherein the predetermined size range is obtained by setting or calculating a historical data, which comprises the display size of the display area (304) mostly used for displaying the information units (514), regarding display behaviours of the display area (304).

3. The system according to claim 1, wherein ratios of displayed sizes between different information units (514) among the information units (514) remain the same before or after the select event occurs.

4. The system according to claim 1, wherein the detecting module (504) detects whether the select event occurs by detecting whether or not the information column (512) is continuously clicked for a predetermined times.

5. A method for displaying information, comprising:
Loading and displaying at least a portion of an information page (510) in a display area (304) of a mobile apparatus, wherein the information page (510) comprises at least an information column (512) having a plurality of information units (514) arranged along an arrangement direction, and the information units (514) comprise at least one of words, pictures, and icons; detecting wherein on not a select event occurs in the information column (512), and issuing a switch command when the select event occurs;
displaying the information units (514) according to a display size within a predetermined size range when the switch command is issued;
adjusting a layout of the information units (514) in the information column (512) so that an arrangement length (704) of the information units (514) in the arrangement direction does not exceed a width of the display area (304);
detecting whether or not an operated event occurs after the select event occurs; and, when the operated event occur, displaying the information page (510) in the display area (304) according to an original format before the select event occur 21 wherein the operated event is that the information page displayed in the display area (304) is operated to move towards the arrangement direction or that the information page displayed in the display area (304) is operated to move towards a browsing direction and exceeds a predetermined range, the browsing direction being substantially perpendicular to the arrangement direction.

6. The method according to claim 5, wherein the predetermined size range is obtained by setting or calculating a historical data, which comprises the display size of the display area (304) mostly used for displaying the information units (514), regarding display behaviours of the display area (304).

7. The method according to claim 5, wherein ratios of displayed sizes between different information units (514) among the information units (514) remain the same before or after the select event occurs.

8. The method according to claim 5, wherein the select event is detected by detecting whether or not the information column (512) is continuously clicked for a predetermined times.

9. A computer program product, comprising a plurality of command codes (408), wherein the command codes (408) are used for driving a mobile apparatus to execute the method for displaying information according to any one of claims 5 to 8.

## Patentansprüche

1. System zur Anzeige einer Informationsseite (510), geeignet für eine mobile Vorrichtung, umfassend:
Lademodul (502), das eingerichtet ist, um die Informationsseite (510) zu laden und in einem Anzeigebereich (304) der mobilen Vorrichtung anzuzeigen, wobei die Informationsseite (510) wenigstens eine Informationsspalte (512) umfasst, die eine Vielzahl von Informationseinheiten (514) aufweist, die entlang einer Anordnungsrichtung angeordnet sind, und die Informationseinheiten (514) wenigstens eines von Wörtern, Bildern und Zeichen umfassen;
Erfassungsmodul (504), das eingerichtet ist, um zu erfassen, ob ein Auswahlereignis in der Informationsspalte (512) auftritt oder nicht, und um einen Schaltbefehl zu erteilen, wenn das Auswahlereignis auftritt; und
Anpassungsmodul (506), verbunden mit dem Erfassungsmodul (504) und eingerichtet, um die Informationseinheiten (514) gemäß einer Anzeigegröße innerhalb eines vorbestimmten Größenbereichs anzuzeigen, wenn der Schaltbefehl erteilt wird, und um ein Layout der Informationseinheiten (514) in der Informationsspalte (512) zu ändern, so dass eine Anordnungslänge (704) der Informationseinheiten (514) in Anordnungsrichtung eine Breite des Anzeigebereichs (304) nicht überschreitet,
wobei das Erfassungsmodul (504) weiter eingerichtet ist, um zu erfassen, ob ein Bedienungs-Ereignis auftritt oder nicht, nachdem das Auswahlereignis auftritt, und um, wenn das Bedienungs-Ereignis auftritt, einen Wiederherstellungsbefehl an das Anpassungsmodul (506) zu erteilen, um die Informationsseite (510) in dem Anzeigebereich (304) gemäß einem ursprünglichen Format anzuzeigen, bevor das Auswahlereignis aufgetreten ist, und wobei das ausgeführte Ereignis darin besteht, dass die in dem Anzeigebereich (304) angezeigte Informationsseite (510) bedient wird, um sich in Richtung der Anordnungsrichtung zu bewegen, oder dass die in dem Anzeigebereich (304) angezeigte Informationsseite (510) bedient wird, um sich in Richtung einer Browsing-Richtung zu bewegen und sie einen vorbestimmten Bereich überschreitet, wobei die Browsing-Richtung im Wesentlichen senkrecht zur Anordnungsrichtung ist.

2. System gemäß Anspruch 1, wobei der vorbestimmte Größenbereich durch Setzen oder Berechnen von Vergangenheitswerten erhalten wird, welche die Anzeigegröße des Anzeigebereichs (304) umfassen, der hauptsächlich zur Anzeige der Informationseinheiten (514) benutzt wird, bezüglich Anzeigeverhalten des Anzeigebereichs (304).

3. System gemäß Anspruch 1, wobei Verhältnisse von angezeigten Größen zwischen verschiedenen Informationseinheiten (514) unter den Informationseinheiten (514) gleich bleiben, bevor oder nachdem das Auswahlereignis auftritt.

4. System gemäß Anspruch 1, wobei das Erfassungsmodul (504) erfasst, ob das Auswahlereignis auftritt, indem es erfasst, ob die Informationsspalte (512) für eine vorbestimmte Anzahl von Malen kontinuierlich angeklickt wird oder nicht.

5. Verfahren zur Anzeige von Informationen, umfassend:
Laden und Anzeigen wenigstens eines Teils einer Informationsseite (510) in einem Anzeigebereich (304) einer mobilen Vorrichtung, wobei die Informationsseite (510) wenigstens eine Informationsspalte (512) umfasst, die eine Vielzahl Informationseinheiten 514 aufweist, angeordnet entlang einer Anordnungsrichtung, und die Informationseinheiten (514) mindestens eines von Wörtern, Bildern oder Zeichen umfassen;
Anzeigen der Informationseinheiten (514) gemäß einer Anzeigegröße innerhalb eines vorbestimmten Größenbereichs, wenn der Schalterbefehl erteilt wird;
Anpassen eines Layouts der Informationseinheiten (514) in der Informationsspalte (512), so dass eine Anordnungslänge (704) der Informationseinheiten (514) in Anordnungsrichtung eine Breite des Anzeigebereichs (304) nicht überschreitet;
Erfassen, ob ein Bedienungs-Ereignis auftritt oder nicht, nachdem das Auswahlereignis auftritt; und
wenn das ausgeführte Ereignis auftritt, Anzeigen der Informationsseite (510) in dem Anzeigebereich (304) gemäß einem ursprünglichen Format, bevor das Auswahlereignis auftrat, wobei das Bedienungs-Ereignis darin besteht, dass die in dem Anzeigebereich (304) angezeigte Informationsseite (510) bedient wird, um sich in Richtung der Anordnungsrichtung zu bewegen, oder dass die in dem Anzeigebereich (304) angezeigte Informationsseite (510) bedient wird, um sich in Richtung einer Browsing-Richtung zu bewegen und sie einen vorbestimmten Bereich überschreitet, wobei die Browsing-Richtung im Wesentlichen senkrecht zur Anordnungsrichtung ist.

6. Verfahren gemäß Anspruch 5, wobei der vorbestimmte Größenbereich durch Setzen oder Berechnen von Vergangenheitswerten erhalten wird, welche die Anzeigegröße
des Anzeigebereichs (304) umfassen, der hauptsächlich zur Anzeige der Informationseinheiten (514) benutzt wird, bezüglich Anzeigeverhalten des Anzeigebereichs (304).

7. Verfahren gemäß Anspruch 5, wobei Verhältnisse von angezeigten Größen zwischen verschiedenen Informationseinheiten (514) unter den Informationseinheiten (514) gleich bleiben, bevor oder nachdem das Auswahlereignis auftritt.

8. Verfahren gemäß Anspruch 5, wobei das Auswahlereignis durch Erfassen, ob die Informationsspalte (512) für eine vorbestimmte Anzahl von Malen kontinuierlich angeklickt wird oder nicht, erfasst wird.

9. Computerprogrammprodukt, umfassend eine Vielzahl von Befehlscodes (408), wobei die Befehlscodes (408) benutzt werden, um eine mobile Vorrichtung zu betreiben, um das Verfahren zur Anzeige von Informationen gemäß irgendeinem der Ansprüche 5 bis 8 auszuführen.

## Revendications

1. Système d'affichage d'une page d'information (510) approprié pour un appareil mobile, comprenant :
un module de chargement (502) agencé pour charger et afficher la page d'information (510) dans une zone d'affichage (304) de l'appareil mobile, dans lequel la page d'information (510) comprend au moins une colonne d'information (512) ayant une pluralité d'unités d'information (514) agencées dans une direction d'agencement, et les unités d'information (514) comprennent au moins l'un de mots, d'images et d'icônes ;
un module de détection (504) agencé pour détecter si un événement sélectionné survient dans la colonne d'information (512), et pour émettre une commande de commutation lorsque l'événement sélectionné survient ; et
un module de réglage (506), couplé au module de détection (504), agencé pour afficher les unités d'information (514) en fonction d'une taille d'affichage dans une plage de tailles prédéterminées lorsque la commande de commutation est émise, et pour changer une mise en page des unités d'information (514) dans la colonne d'information (512) afin qu'une longueur d'agencement (704) des unités d'information (514) dans la direction d'agencement ne dépasse pas une largeur de la zone d'affichage (304),
dans lequel le module de détection (504) est en outre agencé pour détecter si un événement actionné survient après que l'événement sélectionné est survenu et, lorsque l'événement actionné survient, pour émettre une commande de récupération au module de réglage (506) pour afficher la page d'information (510) dans la zone d'affichage (304) selon un format d'origine avant que l'événement sélectionné ne soit survenu, l'événement actionné étant que la page d'information affichée dans la zone d'affichage (304) est actionnée pour se déplacer dans la direction d'agencement ou que la page d'information affichée dans la zone d'affichage (304) est actionnée pour se déplacer dans une direction de navigation et dépasse une plage prédéterminée, la direction de navigation étant sensiblement perpendiculaire à la direction d'agencement.

2. Système selon la revendication 1, dans lequel la plage de tailles prédéterminées est obtenue en réglant ou en calculant des données historiques comprenant la taille d'affichage de la zone d'affichage (304) la plus utilisée pour afficher les unités d'information (514), en ce qui concerne les comportements d'affichage de la zone d'affichage (304).

3. Système selon la revendication 1, dans lequel les rapports de tailles affichées entre différentes unités d'information (514) parmi les unités d'information (514) restent identiques avant ou après la survenance de l'événement sélectionné.

4. Système selon la revendication 1, dans lequel le module de détection (504) détecte si l'événement sélectionné survient en détectant si la colonne d'information (512) est continuellement cliquée pendant un temps prédéterminé.

5. Procédé d'affichage d'informations, comprenant :
le chargement et l'affichage d'au moins une partie d'une page d'information (510) dans une zone d'affichage (304) d'un appareil mobile, dans lequel la page d'information (510) comprend au moins une colonne d'information (512) ayant une pluralité d'unités d'information (514) agencées dans une direction d'agencement, et les unités d'information (514) comprennent au moins l'un de mots, d'images et d'icônes ;
la détection si un événement sélectionné survient dans la colonne d'information (512), et l'émission d'une commande de commutation lorsque l'événement sélectionné survient ;
l'affichage des unités d'information (514) en fonction d'une taille d'affichage dans une plage de tailles prédéterminées lorsque la commande de commutation est émise ;
le réglage d'une mise en page des unités d'information (514) dans la colonne d'information (512) afin qu'une longueur d'agencement (704) des unités d'information (514) dans la direction d'agencement ne dépasse pas une largeur de la zone d'affichage (304) ;
la détection si un événement actionné survient après que l'événement sélectionné est survenu ; et
lorsque l'événement actionné survient, l'affichage de la page d'information (510) dans la zone d'affichage (304) selon un format d'origine avant que l'événement sélectionné ne soit survenu, dans lequel l'événement actionné est que la page d'information affichée dans la zone d'affichage (304) est actionnée pour se déplacer dans la direction d'agencement ou que la page d'information affichée dans la zone d'affichage (304) est actionnée pour se déplacer dans une direction de navigation et dépasse une plage prédéterminée, la direction de navigation étant sensiblement perpendiculaire à la direction d'agencement.

6. Procédé selon la revendication 5, dans lequel la plage de tailles prédéterminées est obtenue en réglant ou en calculant des données historiques comprenant la taille d'affichage de la zone d'affichage (304) la plus utilisée pour afficher les unités d'information (514), en ce qui concerne les comportements d'affichage de la zone d'affichage (304).

7. Procédé selon la revendication 5, dans lequel les rapports de tailles affichées entre différentes unités d'information (514) parmi les unités d'information (514) restent identiques avant ou après la survenance de l'événement sélectionné.

8. Procédé selon la revendication 5, dans lequel l'événement sélectionné est détecté en détectant si la colonne d'information (512) est continuellement cliquée pendant un temps prédéterminé.

9. Produit de programme informatique, comprenant une pluralité de codes de commande (408), dans lequel les codes de commande (408) sont utilisés pour amener un appareil mobile à exécuter le procédé d'affichage d'informations selon l'une quelconque des revendications 5 à 8.
